# EUROPEAN PATENT APPLICATION

(11) **EP 4 729 477 A1**
(43) Date of publication of application: **22.04.2026**
(21) Application number: 24206788.2
(22) Date of filing: 15.10.2024
(51) Int. Cl.: C01B 32/05, C01B 32/205, H01M 4/96

(54) **A PROCESS FOR THE PREPARATION OF A CARBON PRODUCT**

(71) Applicant: Yerrawa B.V., 3871 KM Hoevelaken (NL)
(72) Inventor: O'CONNOR, Paul, 3871 KM Hoevelaken (NL); DAAMEN, Sjoerd, 46880 Bocairent (ES); BABIC, Igor, 4124 AS Hagestein (NL)
(74) Representative: Hoyng Rokh Monegier B.V.

(57) **Abstract**

The invention relates generally to a process for the preparation of a carbon product having a high degree of graphitization in a high yield, comprising the steps of a) contacting a carbon containing starting material, preferably a carbohydrate or hydrocarbon, with a molten salt, b) Carbonising the carbon containing starting material to form a carbon product in mixture with the molten salt at temperatures between 100 and 300°C in an oven or by heating with microwaves, in an atmosphere free of oxygen (O₂), for a time to convert the carbon containing starting material to the carbon product to a degree of graphitization DOG of at least 45%, c) separating the carbon product from the molten salt, wherein the carbon yield CY of the carbon product, defined as the dry weight of the separated carbon product relative to the theoretical amount of carbon in the carbon containing starting material, is preferably at least 40 wt%. The invention also relates to the carbon product obtainable by the process and to use of the carbon product in carbon fibers and electronic applications.

## Description

### BACKGROUND OF THE INVENTION

The invention relates generally to a process for the preparation of a carbon product by carbonising a carbon starting material, preferably carbohydrate or hydrocarbon. The invention also relates to the carbon product obtainable by the process and to products made from the carbon product according to the invention.

### 2. Description of the Related Art

In recent times the carbonisation of biomass has received a lot of interest because it does not produce a lot of CO₂ or carbon containing volatiles compared to pyrolysis processes and in particular when compared to burning biomass. The carbon captured in the carbon product will not contribute to the global warming. The carbon efficiency of the process defines how much of the carbon in the carbon containing start material will be captured and not emitted to the atmosphere. Furthermore, the carbon product can have various different useful properties depending on the physico-chemical properties of the carbon product.

The carbon product can for example be used as soil improver or as absorbent in various processes. However, in recent times the interest has increased significantly in carbon for electronics purposes, such as conductive carbon in electrodes, in capacitors or in batteries.

Carbon materials produced from a biobased feedstock are sometimes also called biochar, even though the carbon material is not char. Biochar is the charcoal-like carbon product obtained when biomass, such as wood, manure or leaves, is heated in an oxygen deficient environment, i.e. pyrolysis. When biochar is chemically or physically activated, it is called activated or active carbon. Known physically activation processes include treatment with steam of carbon dioxide. Known chemical activation processes include treatment with phosphoric acid, zinc chloride, potassium or sodium hydroxide and potassium or sodium carbonate. Owing to the large surface area, high porosity and easy surface modification biochar and active carbon are widely applied as adsorbents.

Biochar is also well known for its agriculture amendment value for increasing crop yields, and as a form of activated carbon in water filtration and toxin remediation applications. It is also important as a carbon sequestration strategy as recognized by the UN Intergovernmental Panel on Climate Change (IPCC). The feedstock used, and quality produced of bio-chars can vary widely but it is possible through well-controlled pyrolysis technologies to create bio-chars that can be considered engineerable in their properties and serve as a new sustainable carbon platform. Such carbons would be suitable for more sophisticated applications like replacing the graphite and activated carbon electrode materials in high demand energy storage devices including Li-lon batteries, and supercapacitors.

The summit of interest is to produce graphene, because it has high strength (200 times stronger than steel in perfect crystalline form) and super high electrical conductivity (5.8 times higher than copper compared on weight basis) and thermal conductivity. These properties promise application of graphene in many different applications such as anti-corrosion coatings and paints, efficient and precise sensors, faster and efficient electronics, energy storage (batteries), flexible displays, efficient solar panels, faster DNA sequencing, drug delivery, and more. Graphene has been described as potentially disruptive technology. However, graphene can be produced by methods that often are complex, expensive and have low production yields.

A process of particular interest starts from graphite (crystalline carbon) that occurs in nature Graphite comprises crystalline stacks of two-dimensional graphene or graphene oxide (go) layers but can also be produced by carbonisation of carbon containing (bio-)material. To obtain graphene as single layers the stack of layers in the graphite must be exfoliated. It is desired that the carbonisation results in a carbon product having a high content of graphite; i.e. a high degree of graphitisation. The degree of graphitisation during carbonisation is characterised by the ratio of sp2 and sp3 characteristic peaks as can be determined by Raman in a method as described below: in graphene or graphene oxide layers the carbon atoms have a sp2 orbital hybridisation, as opposed to other carbon atoms having sp3 orbital hybridisation. Therefore, the ratio can be considered as a measure for the degree of graphitisation.

Ahmed A. MOOSA et. al. present (in Turk J Chem (2021) 45: 493-519) a review article on Graphene preparation and graphite exfoliation. Different graphene preparation methods include chemical vapor deposition on layers of transition metals, epitaxial growth on SiC, arc discharge, unzipping carbon nanotubes and oxidation of graphite to graphene-oxide (GO) with strong acids and strong oxidants to intercalate the graphite followed by exfoliation in water to single sheet GO and reduction of the GO to graphene. These methods are too intricate and complicated to be commercially relevant.

JP2022136860A describes an electric double layer capacitor (EDLC) as electricity storage device that comprises electrodes coated with activated carbon with a large surface area as collector, obtained by carbonisation of rice husk or coconut shell. Various different methods have been investigated to optimize the carbon properties to achieve optimum properties, which include capacity, long cycle life, durability. Such capacitors using activated carbon attempts are described in WO2018/092721, JP 2005-243933, JP 2014-165435, JP 2005-243933, JP 2007-67034 and JP 2016-18808.

Sam et al in Synthesis of biomass-based carbon aerogels in energy and sustainability in Carbohydrate Research 491 (2020) describe carbon aerogel materials with very high surface area produced from biomass and their use i.a. as electrical conductor and supercapacitors. The fabrication procedure of carbon aerogels generally comprises four main steps i.e., sol-gel polymerization, aging, drying and carbonization. Biomass is converted to carbon aerogels in a process comprising a gelation or hydrothermal step of cellulose in water in an autoclave placed in an oven at a relatively high temperature, followed by a solvent exchange step, where the water in the hydrogel is replaced with an organic solvent such as acetone, and a (freeze-)drying step, where the organic solvent is extracted without collapsing the structure to form the cellulose aerogel, followed by carbonisation of the cellulose aerogel to a carbon aerogel by high-temperature pyrolysis (usually between 600 °C and 1000 °C) under an inert gas (typically nitrogen). The process is complex, costly and has low productivity, so impractical at large industrial scale required for example for batteries.

WO2017/205960 discloses a method for production of activated carbon with high surface area without using strong acids or environmentally unfriendly ZnCl₂ The process comprises synergistic activation using a first and a second salt, by mixing a carbon precursor with the first salt, preferably an alkali salt, and a second salt, preferably a salt comprising P and O, N and O or S and O, and activating the mixture by raising the temperature to a temperature preferably between about 150 °C to about 1000 °C, for example preheating at 200-700°C and activating at 800-1000°C.

WO2018/141911 discloses a process for converting hydrocarbons, preferably a lower hydrocarbon such as methane, to produce hydrogen by contacting the hydrocarbons with a molten salt (ZnCl₂ hydrate) at a temperature above 250°C, preferably above 500°C and wherein the hydrocarbons are cracked to produce hydrogen.

WO2016/087186 discloses a process for the conversion of cellulose biomass, comprising three steps: mixing a molten salt hydrate such as ZnCl₂ hydrate with the biomass, at least partially hydrolysing the cellulose to monomer saccharides (such as glucose) and oligosaccharides, separating and converting the separated monomer- and oligosaccharides in a thermo-catalytic process, such as pyrolysis, catalytic pyrolysis, HTU or solvo-thermal conversion to make deoxygenated saccharides or pyrolysis oil.

WO2022/207757 discloses a process for converting waste material comprising a cellulose containing part and typically also a non-cellulosic material such as polymer material. The process involves contacting with a molten salt at low temperature below 125°C to dissolve cellulose in the molten salt and separating the solution from non-dissolved compounds. The cellulose is separated from the solution. The non-dissolved non-cellulosic material and optional cellulose degradation products are carbonised. Carbonisation of cellulose itself is not described.

EP3985072 (corresponding to US11859089) describes a process for producing crystalline carbon black by injecting a water-in-oil micro-emulsion comprising carbon components, metal catalyst nanoparticles and water into the reaction zone which is at a temperature of above 600 °C, preferably even above 1100 °C and quenching.

Libin Tang et al describe (in Journal of Materials Chemistry, 2012, 22, 5676-5683) the bottom-up synthesis of large-scale graphene oxide nanosheets wherein graphene oxide nanosheets (GONs) were grown using a hydrothermal method starting from glucose, sugar and fructose in a 50 mL Teflon-lined autoclave at growth temperatures ranging from 160 to 220 °C in growth period of 70 to 660 min followed by thermal annealing under nitrogen atmosphere at temperatures ranging from 450 to 1300 °C.

Daniele Perondi et al describe (in Microporous and Mesoporous Materials 323 (2021) 111217) the preparation of graphene-like porous carbon nanosheets GPCNs involving simultaneous pyrolysis and activation of carbon precursors in molten salt to generate GPCNs. In the FeCl₃/ZnCl₂ system, the iron component facilitates the generation of GPCNs by forming a complanate carburized phase in the pyrolysis process, and ZnCl₂ activates the formed carbon to produce a porous structure. Several types of metal-molten salts, such as LiCI/KCI, KCl/ZnCl₂, and FeCl₃/ZnCl₂ systems have been developed to synthesize nanosheets. Cellulose, FeCl₃.H2O and ZnCl₂ are mixed, evaporated for 2 hours at 80°C, dried at 100°C and subsequently pyrolised in a pyrolytic reactor at a temperature from 700 - 1000°C.

S. Saqib Shams et al describe (in Materials Letters 161, (2015), 476-479) the synthesis of graphene from biomass using one-step pyrolysis wherein under flowing nitrogen atmosphere, camphor leaves were heated to 1200 °C at10°C/min and then cooled down to room temperature wherein the camphor leaves were reduced to few layer graphene.

Deepti Krishnan et al describe (in ACS nano VOL. 8, NO. 1,449-457, 2014) Graphene Oxide Assisted Hydrothermal Carbonization of Carbon Hydrates. The process comprises hydrothermal carbonization (HTC) of glucose or cellulose in an autoclave at temperatures of about 200°C under autogenic pressure in the presence of Graphene oxide (GO) to alter the morphology of its HTC product, resulting in more conductive carbon materials with higher degree of carbonization. The carbon yield is about 10 wt %. The product is subsequently annealed in a microwave to increase graphitization and conductivity.

Muhammad Taqi provides (in BioResources 15(4), 9756-9785) a review on Biobased graphene derived from biomass wastes. The methods involve thermal treatment of the biomass, such as pyrolysis, carbonisation and graphitisation and are all involve high and even very high temperatures.

Dohyung Kang et al describe (in Applied Catalysis B: Environmental Volume 254, 5 October 2019, Pages 659-666) Catalytic methane pyrolysis in molten MnCl₂-KCl wherein methane is decomposed to produce molecular hydrogen and solid carbon catalyzed by contact with molten KCl:MnCl₂ mixtures in a bubble column reactor from 700 to 1050 °C. The best carbon product obtained from the molten MnCl₂(67)-KCl(33) comprises stacks of more than 30 layers of graphene having an I(D)/I(G) ratio of about 0.6 compared to carbon product obtained from KCI(100) having an I(D)/I(G) ratio of 1.37 corresponding to amorphous carbon.

The prior art processes generally have one or more problems of being complex and expensive, having low production yields or producing low quality carbon material. Thus, there is a particular need for an improved process that is less expensive, has a good yield, preferably is scalable to high production volumes and produces good quality carbon material that can be used for example for the manufacture of electronic materials, for example for electrodes and capacitors, for producing Graphene, Graphene Oxide and Carbon Fibers.

### SUMMARY DESCRIPTION OF THE INVENTION

The present invention addresses these problems by providing a process as described in the claims. According to the invention there is provided to a process for the preparation of a carbon product having a high degree of graphitization in a high yield, comprising the steps of a) contacting a carbon containing starting material, preferably a carbohydrate or hydrocarbon, with a molten salt, b) Carbonising the carbon containing starting material to form a carbon product in mixture with the molten salt at temperatures between 100 and 300°C in an oven or by heating with microwaves, in an atmosphere free of oxygen (O₂), for a time to convert the carbon containing starting material to the carbon product to a degree of graphitization DOG of at least 45%, c) separating the carbon product from the molten salt, wherein the carbon yield CY of the obtained carbon product, defined as the dry weight of the separated carbon product relative to the theoretical amount of carbon in the carbon containing starting material, is preferably at least 40 wt%.

It was surprisingly found that the process of the invention produces a carbon product having a high degree of graphitization (DOG) at a high yield. Due to the low temperatures for carbonisation in the molten salt hydrate, the conversion to carbon is complete with high carbon content and low liquid hydrocarbons. Low amounts of below 1 wt% of liquid hydrocarbons could be achieved. The energy consumption of the process is relatively low due to the relatively low temperatures.

A further advantage of the process is that the carbon product can relatively easily be recovered by washing out the molten salt, which is easy compared to prior art carbonisation or pyrolysis processes as the carbonisation product of the invention has a low liquid hydrocarbons residue and there is no need to for additional separation or cleaning steps for side product.

In the carbonisation process a bio-based material can advantageously be used that has a high oxygen content, which is normally a disadvantage as the oxygen needs to be removed for most purposes (like bio-oil), but for the present envisaged use as precursor for carbon, functionalized carbon and graphene materials it is actually not a problem but an advantage. The carbonisation process of the invention thus converts biomass to useful carbon product and water while producing very carbon-dioxide, low hydrocarbons residues (like char, pitch or Hydrocarbon liquids) and using low amount of energy, which is very beneficial for the environment.

An advantage of the process of the invention is that it allows to produce a carbon product with properties that can vary between wide ranges and can easily be tailored to meet the requirements in a wide range of different applications as will be described below.

Typically, the carbon product can have a high oxygen content OC (i.e. bound oxygen atoms for example in hydroxyl, ether or carboxylic groups), wherein high is considered above 20 wt%. High oxygen content is achieved in particular when the starting material is carbohydrate and when carbonisation is done in hydrated molten salt at relatively low temperature. The high oxygen content in the carbon product provides for hydrophilic and reactive properties. Such carbon material was found to be a good precursor material for several applications. It can easily be dispersed in water, can adsorb and form film on polar surface, can bind ions, such as metal ions, and thus can be modified and functionalized relatively easily. A relatively high oxygen content is also desired for adhesion on polar surfaces, for example for use in metal electrodes or capacitors.

On the other hand in some applications where high conductivity is desired the oxygen content OC can be relatively low; typically below 20 wt%, below 10 wt% or even below 5 wt%. Such relatively low OC, high DOG and high conductivity is achieved in particular when the carbonisation is done in anhydrous molten salt and in particular when using microwave heating in combination with a conductive carbon mixed into the carbon containing start material.

Accordingly, the invention also relates to a carbon product obtainable by the process according to the invention; in particular the carbon product having a DOG of at least 45%, preferably at least 55%, more preferably at least 60% and even more preferably at least 65%.

Accordingly, the invention also relates to the use of the carbon product according to the invention for the manufacture of electrode materials or electrodes, wherein optionally residual molten salt used in the carbonisation step is used as electrolyte.

Accordingly, the invention also relates to the use of the carbon product according to the invention as a precursor for the manufacture of Carbon Fibers, Graphene and Graphene Oxide.

### DETAILED DESCRIPTION OF THE INVENTION

The process of the invention for the preparation of a carbon product having a high degree of graphitization, comprises the steps of
a. Contacting a carbon containing starting material with a molten salt
   i.Wherein the carbon containing starting material preferably is a carbohydrate or hydrocarbon,
   ii.Wherein the molten salt preferably comprises one or more salts selected from the group consisting of ZnCl₂, MnCl₂, FeCl₃, AlCl₃, MgCl₂, the hydrates thereof and mixtures thereof,
b. Carbonising the carbon containing starting material to form a carbon product in mixture with the molten salt;
   i.By heating at temperatures between 100 and 300°C, preferably between 125 and 250°C, more preferably between 150 and 200°C, preferably by heating in an oven or by heating with microwaves,
   ii.in an atmosphere free of oxygen (O₂),
   iii.For a time to convert the carbon containing starting material to the carbon product to a degree of graphitization DOG of at least 45%, preferably at least 55%, more preferably at least 60% and even more preferably at least 65%; wherein degree of graphitization is defined as Ig/(Id+Ig) wherein Ig and Id are respectively Raman adsorption intensities in band G at 1580 cm⁻¹ and Band D in the range of 1330-1340 cm⁻¹
c. Separating the carbon product from the molten salt,
d. optionally washing the separated carbon product,
e. Optionally heating the separated and optionally washed carbon product preferably to a temperature above 200°C, preferably above 250°C, more preferably above 300°C in oxygen free atmosphere,
f. wherein the carbon yield CY of the carbon product, defined as the dry weight of the obtained carbon product relative to the theoretical amount of carbon in the carbon containing starting material, is preferably at least 40 wt%, preferably at least 45 wt%, more preferably at least 50 wt% and wherein the relative graphitization yield, defined as the wt.% percentage of carbon in the starting carbon material that is converted to graphite (DOG x CY) is at least 20 %, preferably at least 25%, more preferably at least 30 % and most preferably at least 40%.

The term molten salt is used to indicate that the salt is used at an elevated temperature where it changes to the liquid state and can act as a ionic solvent, which implies that the temperature is above the melting temperature in case of a pure salt or above a eutectic melting point in case of a mixture of salts or, in case of a hydrated salt, the temperature where the salt dissolves in its hydrated water. In all cases reference is made to a molten salt.

In the process of the invention the salt preferably is a metal halide salt in hydrated or anhydrous form, wherein the metal preferably is Zinc, Aluminum, Antimony, Manganese, Calcium, Iron or Magnesium or combinations thereof and the halide is chloride or bromide or combinations thereof, preferably ZnCl₂, FeCl₃, MgCl₂, MnCl₂, CaCl₂. These molten salts are hydratable and have appropriate low melting temperature, in particular in hydrated state. The molten salts, in particular ZnCl₂, has catalytic properties for the carbonisation process. It was found that the molten salts, in particular ZnCl₂, creates high surface areas in the carbon product, which is beneficial for adsorption properties and as collector for electrode materials.

The most preferred salt is ZnCl₂. Preferably the molten salt comprises at least 70 wt.%, more preferably at least 80 wt% even more preferably at least 90 wt% and most preferably at least 95 wt% ZnCl₂ relative to the total amount of salts, with the remainder of the molten salt being one or more other metal halide salts, preferably AlCl₃, MnCl₂, SbCl₃ or FeCl₃.

Most easy and preferred only ZnCl₂ is used as the salt. Extra acid (preferably HCl, in case of Zinc-chloride) may be added to promote carbonisation.

The carbon containing starting material can in principal be any biomass source, for example from a waste stream. A suitable source can be wood comprising cellulose and lignin. Preferably, the carbon containing starting material is a carbohydrate or hydrocarbon and is preferably a relatively pure starting material. Most preferred are carbohydrates as they split to form water and carbon and can leave higher oxygen in the carbon product. Suitable carbohydrates can be selected from the group of monosaccharides, oligosaccharides, poly-saccharides or polyvinylalcohol or mixtures thereof. Most preferred are cellulose and glucose. Suitable hydrocarbons can be selected from the group of paraffins, ethylene- or propylene containing polymers and lignin. In a special embodiment, further described below, the carbon containing starting material is the carbon product obtained by the process of the invention to further increase the DOG and decrease the oxygen content.

The carbon containing starting material is mixed with the salt and then heated to the carbonisation temperature or directly contacted with the molten salt. An advantage of the process of the invention is that it is easy to recycle the salt after separation of the carbon product back to the step a) typically in molten state and optionally in hydrated state.

In step b, the carbon containing starting material is carbonised to form the carbon product in mixture with the molten salt by heating at carbonisation temperatures between 100 and 300°C , preferably between 125 and 250°C, more preferably between 150 and 200°C. The temperatures are very low compared to prior art pyrolysis and carbonisation processes, which range from 350 - 1000°C. Low temperatures generally result in slow conversion, but in the process of the invention good results are obtained because the metal salt (in particular ZnCl₂) acts as catalyst. Low temperature increases the carbon yield (less CO₂ formation) and results in higher oxygen contents. A high temperature increases conversion speed but decreases CY.

Preferably the carbonisation is done by heating in an oven (atmospheric or autoclave) or by heating with microwaves in an atmosphere free of oxygen (oxygen here means molecular oxygen or O₂). The carbonisation is done in anaerobic conditions to avoid combustion of the carbon. Therefore, it is preferred to carry out step b) in a closed reactor system to avoid air coming in, which has the risk of combustion, or in a system which is open to atmosphere, but pressurised above atmospheric pressure to avoid air from leaking into the system. A closed system can be an autoclave but also a reactor provided with means, for example a condenser to cool, condense and collect gasses formed.

An advantage of using a molten salt hydrate compared to anhydrous molten salt is that it reduces the risk of combustion because the carbonisation temperature is lower and because it creates steam at higher temperatures that is inert and expels oxygen from the reactor.

The process is very fast even though the carbonisation temperatures are very low. Evidently the carbonisation time depends on the temperature. The carbonisation time is chosen to convert the carbon containing starting material to the carbon product to a degree of graphitization DOG of at least 45%, preferably at least 55%, more preferably at least 60% and even more preferably at least 65%; wherein degree of graphitization is defined as Ig/(Id+Ig) wherein Ig and Id are respectively Raman adsorption intensities in band G at 1580 cm- 1 and Band D in the range of 1330-1340 cm-1 which are representative of adsorption of sp2 carbon present in graphene layers and sp3 carbon not present in graphene layers.

After the carbonisation step b) the formed carbon product is separated from the molten salt in step c). The separation can be done by addition of a non-solvent or coagulant that causes the carbon- product to separate from the molten salt and/or by cooling followed by separating the precipitated or coagulated carbon product for example by filtration. Suitable antisolvents are water and C1 to C8 alcohols and ketones, in particular the alcohols of the group of straight chain and branched chain C1 to C4 alcohols, such as methanol, ethanol, propanol, and iso-propanol. Particularly suitable ketones include the C3 to C5 ketones such as acetone and methylethylketone (MEK). Preferred coagulation agents are acetone, ethanol, t-butyl alcohol. Solid separation and washing can be performed either by centrifugation or by filtration. Water is preferred as anti-solvent in particular when molten salt hydrate is used because it can more easily be removed to recover and recycle the molten salt to step a). Cold water is preferred as it cools the molten salt.

Preferably, the separation is followed by washing the separated formed carbon product with water to wash out the salt optionally followed by drying. Washing can be done in multiple steps depending on the required purity of the carbon material. It was found advantageous to wash with washing water comprising an acid to provide a pH below 7, preferably below 5, to improve the efficiency of the washing step and to prevent precipitation of metal salts, for example ZnOHCl, after dilution with water. Suitably the washing is done in reflux in a Soxhlet type of extraction. After the separation and optional washing step, the carbon product is preferably dried.

The carbon yield CY of the carbon product (dried), defined as the weight of the separated carbon product relative to the theoretical amount of carbon in the carbon containing starting material, is preferably at least 40 wt%, preferably at least 45 wt% and the relative graphitization yield, defined as the wt.% percentage of carbon in the starting carbon material that is converted to graphite (DOG x CY) is at least 20 %, preferably at least 25%, more preferably at least 30 % and most preferably at least 4%.

The separated and optionally washed and dried carbon product is optionally heated in a further heating step e) to a temperature above 200°C, preferably above 250°C, more preferably above 300°C preferably in oxygen free atmosphere. This can further increase the DOG and lower the OC.

Optionally (and preferably) a carbon seed material, more preferably graphene-oxide or carbon black, is added to the carbon containing start material. Graphene-oxide works well but is too expensive, so carbon black is preferred. More preferred is that the carbon seed material is the carbon product obtained by the process of the invention having high degree of graphitization or DOG>50% that is in part recycled to the process step a), preferably in a catalytic amount in case of GO because it is so expensive. Good results were obtained wit amounts between 0.001 and 0.5 gr/100gr of the salt in case of GO. In case carbon black or carbon product obtained by process of the invention is used as seed, the upper limit is not critical because it is the same as the envisaged end carbon product but is preferably low in view of efficiency.

In a first embodiment, in carbonisation step b) the carbon containing start material is heated in the molten salt at the specified carbonisation temperature using external heating, preferably in an oven or autoclave, wherein the molten salt preferably is a hydrated molten salt, wherein preferably the amount of carbon containing starting material relative to the total weight of carbon containing starting material and the molten salt is between 1 and 30 wt.%, preferably between 2 and 20 wt, more preferably between 5 and 15 wt%. The carbonisation time is typically less than 4 hours, preferably even less than 3 hours more preferably even less than 2 hours and possibly less than 1 hour.

In second embodiment, in carbonisation step b) the carbon containing start material is heated in the molten salt using microwave heating. In this process the heating is caused by the energy absorption of the microwaves (also referred to as internal heating as opposed to external heating in for example an oven).

Water contained in the mixture of the carbon containing material and molten salt is an adsorbent of the microwave energy. Molten salt hydrate can be used to provide the water. In a preferred embodiment, in step a) a microwave absorbing material, preferably conductive carbon material, more preferably carbon black, is mixed with the carbon containing start material as a seed and in carbonisation step b) the mixture is heated using microwave heating. In this embodiment the salt can be and preferably is anhydrous.

The microwave heating is very fast and high ratio of carbon containing start material to molten salt can be used. Preferably the molten salt is anhydrous to prevent foaming due to quick release of steam. Preferably the weight ratio of carbon containing starting material to the total weight of the carbon containing starting material and the molten salt is 0.2 - 2, preferably 0.5 - 1.5, more preferably 0.7 - 1.3. The amount of microwave absorbing material is chosen to have an effective transfer of heat in the carbon product. The microwave absorbing material is preferably mixed and as homogeneously dispersed as possible. However, the amount is not very critical in a preferred case wherein the microwave absorbing material is the carbon product obtained by the process of the invention that is in part recycled to the process step b). Good results are obtained when the weight ratio of microwave absorbing material and molten salt solvent is between 0.05 and 0.5, preferably between 0.18 and 0.3 and more preferably between 0.15 and 0.25. In this embodiment the heating is very efficient and carbonisation time can be less than 1 hours, preferably even less than 0.5 hours more preferably even less than 2 hours and possibly less than 1 hour. Very low oxygen contents and very high conductivity can be obtained when using longer microwave times and higher microwave energy. A microwave energy between 50 and 500 W per 22 gr mixture can suitably be used to mildly heat the mixture for carbonisation in a time frame between 5 and 30 minutes. Optionally, the washed and preferably dried carbon product is subjected to post heat treatment using microwave energy preferably using microwave energy between 500 and 1000 W per 2 gr sample for a time between 10 and 100 sec.

In a special embodiment of the invention, the carbon containing starting material is the carbon product obtained by the process of the invention which is further carbonized in a second carbonisation according to the invention to further increase the DOG, conductivity and decrease the oxygen content. Preferably, the carbon starting material in the second carbonisation is the carbon product obtained by the process according to the first embodiment described above which is carbonized according to the second embodiment described above. Alternatively, a carbon containing start material, preferably a carbohydrate, is first carbonized using a molten salt hydrate in an oven and further carbonized using microwave heating, preferably without addition of a microwave energy adsorber when the carbon product from the first carbonisation step is sufficiently carbonized to act as a microwave energy adsorber. One advantage of this two-step carbonisation process is the flexible production of a carbon product having a relatively high OC of typically above 20 or above 25 wt% in a first carbonisation step which can be done in bulk followed by a relatively easy smaller scale carbonisation step for production of a carbon product having a relatively low OC of typically below 25 or 20 wt%.

In yet another embodiment, the resulting product contains salts that can function as electrolyte. This can be conveniently achieved in the process of the invention, wherein the washing is stopped before completely removing the salt to intentionally leave a residual amount of the salt in the formed carbon product to act as electrolyte, wherein preferably the residual metal-halide salt is converted to it's metal-oxide and/or metal hydroxide, preferably by addition of a strong base, which preferably is KOH or NaOH, wherein the amount of residual salt is preferably between 0.01 - 20 wt%, preferably 0.02 - 15 wt%, more preferably 0.5 - 10 wt% of the total weight, and wherein most preferably the residual salt is ZnCl₂ and/or ZnCl₂ converted to ZnO and/or Zn(OH)₂ by addition of a strong base, preferably KOH or NaOH.

The invention also relates to a carbon product obtainable by the process according to any of the embodiments of the process of the invention described above; in particular to a carbon product formed in the carbonisation step has a DOG of at least 45%, preferably at least 55%, more preferably at least 60% and even more preferably at least 65%.

As explained the process allows very flexible adjustment of process conditions to achieve a wide range of different properties useful for different applications. The carbon product preferably has one or more of the features a) to d): a) an oxygen content between 1 and 40 wt%, wherein the OC is preferably above 10 wt% for capacitance, adhesion and adsorption and preferably below 20 wt% in view of conductivity; b) a surface area SA between 100 and 3000 m²/g, preferably between 200 and 2000 m²/gr, c) comprising a fraction of the metal halide salt or it's converted metal oxide or metal hydroxides preferably ZnCl₂, ZnO and/or Zn(OH)2 d) a pore volume between 0.3 and 3.0 ml/g, preferably between 0.5 and 2.0 ml/g e). A wide conductivity range from 0 to 73 S/m was achieved as shown in the examples even without further upgrading the obtained carbon product, for example by exfoliation methods, which makes it a promising start material for electrical applications.

The carbon product of the invention, especially the carbon product with higher OC (higher than about 15 or 20 wt%), can be functionalized relatively easily in view of different uses of the carbon product; for example to improve the amount or specificity of absorption of target molecules. This can be done in further steps comprising;
- a functionalization step wherein the carbon product is modified to contain one or more heteroatoms, preferably sulfur, nitrogen or metals,
- wherein preferably a functional compound comprising such heteroatoms is added after the carbonisation step to absorb in the carbon product and bind or react with oxygen in the carbon product, for example by impregnation of a solution of such functional compound and optionally drying
   - optionally followed by a treatment, preferably a heat treatment at temperature above 350°C, to bind the functional compound in the carbon, and/or
- optionally to reduce the oxygen content, preferably by heating, optionally with reducing agent wherein the surface area and/or oxygen content can be reduced for example for enhancing electrical conductivity.

Alternatively, the functionalization step can be done by adding a functional compound before the carbonisation step b); these functional compounds are preferably sulfur and/or nitrogen containing organic compounds that also carbonize during the carbonisation step. Metal containing functional compounds are preferably added to the carbon product after carbonisation.

The invention also relates to functionalized carbon product obtainable by the process described above.

The carbon product obtained by the process is a powder having granular carbon particles. The carbon product can be shaped in ways known in the art (granulating, extruding, compacting etc). In a special embodiment the shaping is done before carbonisation by shaping the mixture of the carbon containing start material and molten salt into a shape and then carbonising. For example, a mixture of cellulose and molten salt can be spun to a fiber and subsequently carbonized followed by (optionally partly) removing the salt.

Alternatively and more easily, the shaping is done after carbonisation. Carbon fibers can be made by spinning the mixture of the carbonized carbon product in the molten salt after carbonisation step b), optionally after mixing with a binder, into a water bath wherein the molten salt is removed to obtain a fiber comprising the carbon product of the invention, which then can be subjected to further treatments as described above, for example functionalization and heating.

Alternatively and more easily, the shaping is done after carbonisation and separating step c) and optionally after washing step d). For example, the carbon product obtained after step c) or d) (optionally dried and further heated or functionalized) comprises a low amount of water forming a paste like mixture that can readily be shaped and subsequently dried or heated at high temperature for example as defined in step e) to increase the hardness of the shaped carbon product and increase conductivity. Optionally the carbon product is mixed with a binder material before shaping.

Another advantage of the carbon product of the invention having such high degree of graphitization (DOG) is that it is a good precursor for producing graphene or graphene-oxide. The invention also relates to the use of the carbon material of the invention as a precursor for the manufacture of Carbon Fibers, Graphene and Graphene Oxide.

The invention also relates to the use of the carbon material obtainable by the above-described processes for the manufacture of electrode materials or electrodes, wherein optionally residual salt is used as electrolyte.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention. The invention is further illustrated by the following examples.

The invention is illustrated by the experiments described below.

### DESCRIPTION OF EXPERIMENTS

### Surface area

Surface areas were measured by BET analysis by a low temperature Nitrogen adsorption method using ASAP 2400 Micromeritics equipment from which surface area was calculated based on BET theory.

### Degree of graphitisation by Raman spectroscopy

Analyses were performed in a Horiba-Jobin Yvon iHR320 system with a Symphony detector coupled with an Olympus microscope. The laser used was HeNe (632.8 nm), with approximately 10 mW of power. Raman spectroscopy analysis was conducted to evaluate the degree of graphitization of materials produced. From Raman spectra the ratio of ID/IG bands were determined. Band D is usually found in the range of 1330-1340 cm- 1 and is linked to sp3 carbon that is not present in graphene layers whereas band G in 1580 cm- 1 is linked to sp2 carbon that is present in graphene layers. A lower ID/IG ratio implies a carbon product having high graphitization, having higher amount of graphene (or graphene oxide) and a more orderly graphite structure.

### Measurement of XRD crystal type

The cellulose products obtained in the experiments are characterised using XRD. XRD measurements are done according to the method described by: Z. Man, N. Muhammand, A. Sarwono, M.A. Bustam, M. Vignesh Kumar, S. Rafiq in J. Polym. Environ 19 (2011) 726-731: Preparation of cellulose nanocrystals using an Ionic liquid. Crystal type I or II is identified by peak positions, which are for type I on 20 of 22.6° (the [200] reflection) and for type II on 20 of 20° and 22° (the [110] and [020] reflection).

### Measurement of XRD crystallinity

The product XRD crystallinity (mentioned in the above document as crystallinity index) was determined using Segal's formula: Crl = (I₀₀₂-Iₐₘ)/I₀₀₂ wherein I₀₀₂ is the overall intensity of the peak at 20 of 22.6° for type I or 22° for type II cellulose and Iₐₘ is the intensity of the baseline at 20 about 18°.

### Measurement of oxygen content

The oxygen content is defined as the weight percentage of oxygen atoms in the obtained carbon product divided by the weight of the carbon product, wherein the weight of the oxygen atoms is calculated from the mole percentage Oxygen atoms. The oxygen content is measured by elemental analysis. A Flash 2000 (Interscience) instrument was employed to analyze the elemental composition (C, H, and O mass fraction) of solid carbon samples. In this analysis, the samples were completely oxidized in O2 and the [C], [H] mass fraction were calculated directly based on the amount of CO₂ and H2O formed, and the [O] mass fraction was obtained by difference.

### Measurement of yield

The carbon yield CY is defined as the measured weight of dried carbon product divided by the calculated weight of carbon in the carbon containing start material from which the carbon product is obtained.

### The concentration of zinc in the filtrate

The concentration of zinc in the filtrate was measured it with a titration with EDTA 0.1N with Eriochromeblack-T as indicator. Procedure: Transfer zinc solution to Erlenmeyer flask. Dilute to about 100 mL with distilled water, if necessary. Add 2 mL of pH 10 ammonia buffer solution. Add a pinch of Eriochrome Black T ground with sodium chloride (100 mg of indicator plus 20 g of analytical grade NaC!). Titrate with EDTA solution till the color changes to blue and calculate the moles of Zinc ions.

### Conductivity

The conductivity is measured as follows: the carbon product is filled into a cylinder and compressed by a piston by hand. When the powder is compressed to the maximum, the electric resistance (Ohm) is measured between two electrodes situated on top of the piston and on the bottom of the cylinder. Specific resistance is calculated from the cross-sectional area (A=m²), and the length (l=m) of the compressed cylinder: Specific resistance = R*A/I (Ohm.m) Conductivity = 1/(R*A/I) (Siemens/m).

### Materials used

ZnCl₂ (from Sigma, 31650-M); Cellulose (from Sigma C6288); graphene oxide (from Merck 763705); graphite flakes (from Sigma, 332461).

### Preparation of ZnCl₂ hydrate molten salt solvent.

The ZnCl₂ hydrate molten salt solvent was prepared by adding 80g of anhydrous ZnCl₂ to 20 g of demineralized water.

### Comparative Examples CA - CB

Comparative example CA and CB are Raman measurements on commercially available samples: CA: crystalline layered carbon (Pure Graphite from Sigma, 332461) and CB: amorphous carbon (from Kuraray) was measured with as described above.

### Comparative examples CD - CE

Comparative examples CD - CE represent data taken from literature described above.

### Example Ex1

A reaction mixture was prepared by mixing 8 g of Glucose was mixed with 100g of ZnCl₂-hydrate (80% ZnCl₂), in an autoclave reactor of 200 ml, under a nitrogen blanket. The reactor was heated to 175°C in 30 min and kept on that temperature for 30 min. Then it was cooled down to a temperature below 70°C in 30 min. The reaction product was washed and filtered with excess of demi water acidified (pH<4) with HCl until the concentration of zinc detected in the filtrate was below 1 mg/l.

### Example Ex2

A reaction mixture was prepared as in Example 1 except that also 10 mg of Graphene oxide was added to the mixture. The mixture was carbonized, cooled and washed as in Ex1, except that the reactor was heated to 190°C in 30 min and kept on that Temperature for 300 min.

### Example Ex3

Reaction mixture was prepared as in Ex1 except that the reactor was heated to 175°C in 30 min and kept on that temperature for 30 min.

The carbon products obtained in the (comparative) examples were measured using the above-described measurement methods for ID/IG and the oxygen content OC. The results are summarized in Table 1.

### Examples Ex4 - 9

Reaction mixtures were prepared as in Ex1 with different carbon containing starting materials and variations in temperatures and times as indicated in table 1.

### Example Ex10

A reaction mixture was prepared by mixing 10 g of Glucose,10 g of anhydrous ZnCl₂ and 2 g of VXC-72R (Carbon-Black) in a 150 ml beaker. Over this beaker a 600ml beaker was placed and the air in the beakers was replaced with Nitrogen. This set-up was heated in a microwave oven at low heating rate (100 Watt) for 10 min. During this time a Carbon-foam was formed caused by the reaction between the different components and the expulsion of steam formed by the carbonization of the glucose. After the reaction the sample was cooled and washed as described above in Ex1.

### Example Ex10a and Ex10b

2 g of the end-product of Ex10 was weighed in a 10 ml tube with a loose cap. Air in tube was replaced with Nitrogen. The tube was placed in a microwave oven and was heated for 30 sec at 800 Watt to produce carbon product Ex10a. A consecutive interval of microwave heating was applied on carbon product Ex10a for 60 sec at 800 Watt to produce carbon product Ex10b. The temperature in Ex10, 10a and 10b was measured using an Infrared camera; the highest temperature in Ex10 was 200°C. The highest temperature in the additional microwave heat treatment in Ex10a and Ex 10b was 300°C.

### Examples Ex11 - 13

Reaction mixtures were prepared as in Ex1 using hydrated ZnCl2 salt and were by heating at the indicated temperature and also exposed to microwave as indicated in table 1.

**Table 1**

| EXP | sample | carbonisation method | DOG | OC (wt%) | C (S/m) | CY(%) |
|---|---|---|---|---|---|---|
| CA | Pure Graphite | Commercial product | 0.88 | | | |
| CB | Active Carbon | Commercial product | 0.33 | | | |
| CC | CH4 (Ref. 1) | MnCl₂/KCl @ 1050C 5 hr | 0.42 | | | 30 |
| CD1 | cellulose (ref.2) | pyrolytic/700- 900C/1hr | | | | 9.6-24 |
| CD2 | cellulose (ref.2) | 1FeCl₃/6ZnCl2/700C/1 hr | 0.49 | | | 33.4 |
| CD3 | cellulose (ref.2) | 1FeCl₃/6ZnCl2/800C/1hr | 0.46 | | | 7.3 |
| CE | Cellulose / GO (ref.3) | 350C/MW | | 4 | 1.1 | 10 |
| Ex1 | Glucose | ZnCl₂ hydr/175C/30min | 0.53 | 30 | | 45-50 |
| Ex2 | Glucose / GO | ZnCl₂ hydr/175C/30min | 0.63 | 28 | | |
| Ex3 | cellulose | ZnCl₂ hydr/175C/30min | 0.69 | 30 | | 45-50 |
| Ex4 | cellulose | ZnCl₂ hydr/175C/60min | 0.68 | | | 60 |
| Ex5 | Cellulose - HCC | ZnCl₂ hydr/170C/60min | 0.74 | | | 60 |
| Ex6 | glucose | ZnCl₂ hydr/150C/30min | 0.63 | | | 71 |
| Ex7 | glucose | ZnCl₂ hydr/175C/30min | 0.78 | | | |
| Ex8 | glucose | ZnCl₂ hydr/200C/30min | 0.64 | | | |
| Ex9 | glucose | ZnCl₂ hydr/250C/30min | 0.65 | | | 45 |
| Ex10 | Glucose / CB | ZnCl₂ anhydr/ MW@100W/10min | 0.59 | 14 | 8.4 | |
| Ex10a | Carbon from Ex10 | Additional MW@800W/30sec | 0.63 | 9 | 9.4 | |
| Ex10b | Carbon from Ex11a | Additional MW@800W/60sec | 0.67 | <5 | 72.9 | |
| Ex11 | cellulose | ZnCl₂ hydr/MW | 0.61 | | | |
| Ex12 | Cellulose-HCC | ZnCl₂ hydr/MW | 0.59 | | | |
| Ex13 | Glucose | ZnCl₂ hydr/175C/MW | 0.65 | | | |

| | | | | | | |
|---|---|---|---|---|---|---|
| ref 1 is Dohyung Kang, ref 2 is Perondi, ref.3 is Deepti Krishan publications described above | | | | | | |

Comparative examples CA and CB show the boundaries of a very high and very low degree of graphitization (DOG) of commercial "pure" graphite having DOG = 0.88 and amorphous active carbon having DOG = 0.33. The DOG value is expected to range between that of the "pure" graphite and amorphous carbon, so the higher the DOG the more it looks like pure graphite. It is a qualitative value of the amount of graphite formed in the carbon product but is not to be taken quantitative. The comparative examples CC - CE show values obtained from literature that are also based on the Raman measurement (wherein DOG is 1/(1+Id/Ig)).

The Examples Ex1 - Ex13 done at our laboratory show that the process of the invention compared to the prior art can operate at lower temperatures with higher carbon yield, without necessarily having to use expensive graphene oxide seeding. Furthermore, the obtained carbon according to the invention contains more oxygen, which is perceived as beneficial for conductivity and capacitance properties and for adsorption properties. The carbon yield in the above-mentioned examples according to the invention is 45wt% or higher, which is much higher than the prior art processes (ref 2). The high carbon yield implies a low carbon loss, so it means low emission of CO₂, which is desirable in view of global warming. The carbon products of the invention have a higher DOG than the prior art (ref 2) even though the carbonisation temperatures are much lower.

Prior art Krishan (ref 2) describes Graphene Oxide Assisted carbonisation by microwave heating. Krishan does not use a molten salt and does rely on using graphene oxide which is too expensive to be practically feasible. The carbon yield was only 10 wt% which is very low compared to the present invention, whereas the conductivity is low compared to the measured carbon products of the invention.

SEM pictures showed that the carbon product typically comprises particles having that predominantly (>50 wt%) have a diameter between 20-30 nm.

The examples show that the process of the invention has the advantage that it operates at significantly lower temperatures than the prior art methods and does not rely on seeding with the very expensive GO and nevertheless results in carbon product with desirable properties (OC, PV and C) and can be flexibly adapted to produce the properties in view of the envisaged applications.

## Claims

1. A process for the preparation of a carbon product having a high degree of graphitization, comprising the steps of
a. Contacting a carbon containing starting material with a molten salt
i. Wherein the carbon containing starting material preferably is a carbohydrate or hydrocarbon,
ii. Wherein the molten salt preferably comprises one or more salts selected from the group consisting of ZnCl₂, MnCl₂, FeCl₃, AlCl₃, MgCl₂, the hydrates thereof and mixtures thereof,
b. Carbonising the carbon containing starting material to form a carbon product in mixture with the molten salt;
i. By heating at temperatures between 100 and 300°C, preferably between 125 and 250°C, more preferably between 150 and 200°C, preferably by heating in an oven or by heating with microwaves,
ii. in an atmosphere free of oxygen (O₂),
iii. For a time to convert the carbon containing starting material to the carbon product to a degree of graphitization DOG of at least 45%, preferably at least 55%, more preferably at least 60% and even more preferably at least 65%; wherein degree of graphitization is defined as Ig/(Id+Ig) wherein Ig and Id are respectively Raman adsorption intensities in band G at 1580 cm⁻¹ and Band D in the range of 1330-1340 cm⁻¹ ;
c. Separating the carbon product from the molten salt,
d. Optionally washing the separated carbon product,
e. Optionally heating the separated and optionally washed carbon product preferably to a temperature above 200°C, preferably above 250°C, more preferably above 300°C preferably in oxygen free atmosphere,
i. wherein the carbon yield CY of the obtained carbon product, defined as the dry weight of the carbon product relative to the theoretical amount of carbon in the carbon containing starting material, is preferably at least 40 wt%, preferably at least 45 wt% and
ii. wherein the relative graphitization yield, defined as the wt.% percentage of carbon in the starting carbon material that is converted to graphite (DOG x CY) is at least 20 %, preferably at least 25%, more preferably at least 30 % and most preferably at least 40%.

2. The process according to claim 1 , wherein the salt is a metal halide salt in hydrated or anhydrous form, wherein the metal preferably is Zinc, Aluminum, Antimony, Manganese, Calcium, Iron or Magnesium or combinations thereof and the halide is chloride or bromide or combinations thereof, preferably ZnCl₂, FeCl₃, MgCl₂, MnCl₂, CaCl₂ , wherein more preferably the molten salt comprises at least 70 wt.%, more preferably at least 80 wt% even more preferably at least 90 wt% and most preferably at least 95 wt% ZnCl₂ relative to the total amount of salts, with the remainder of the molten salt being one or more other metal halide salts, preferably AlCl₃, MnCl₂, SbCl₃ or FeCl₃.

3. The process according to claim 1 or 2, wherein in carbonisation step b) the carbon containing start material is heated in the molten salt using external heating, preferably in an oven or autoclave, wherein the molten salt is a hydrated molten salt,
a. wherein preferably the amount of carbon containing starting material relative to the total weight of carbon containing starting material and the molten salt is between 1 and 30 wt.%, preferably between 2 and 20 wt, more preferably between 5 and 15 wt%.
b. wherein preferably a carbon seed material, more preferably graphene-oxide or carbon black, is added to the carbon containing start material, wherein most preferably the carbon seed material is the carbon product obtained by the process of claim 1 that is in part recycled to the process step b), preferably in a catalytic amount.

4. The process according to claim 1 or 2, wherein in step a) a microwave absorbing material, preferably conductive carbon material, more preferably carbon black, is added to the carbon containing start material as seed and in step b) the carbon black containing carbon containing start material is heated in the molten salt using microwave heating,
a. wherein preferably the weight ratio of microwave absorbing material and molten salt solvent is between 0.05 and 0.5, preferably between 0.18 and 0.3 and more preferably between 0.15 and 0.25,
b. wherein preferably the microwave absorbing material is the carbon product obtained by the process of claim 1 that is in part recycled to the process step b).
c. wherein the weight ratio of carbon containing starting material to the total weight of the carbon containing starting material and the molten salt is 0.2 - 2, preferably 0.5 - 1.5, more preferably 0.7 - 1.3.

5. The process according to anyone of claims 1 to 3, wherein the carbon containing starting material is a hydrocarbon selected from the group of paraffins, ethylene- or propylene containing polymers and lignin or the carbon containing starting material is a carbohydrate selected from the group of monosaccharides, oligosaccharides, poly-saccharides or polyvinylalcohol, preferably cellulose or glucose or mixtures thereof.

6. The process according to anyone of claims 1 to 3, wherein or wherein the carbon containing starting material is a carbon product obtained by the process of anyone of claim 1 - 5, to further increase the DOG and decrease the oxygen content, preferably wherein the starting material is a carbon product obtained by the process of claim 3, which is subjected to carbonisation process according to claim 4.

7. The process according to anyone of claims 1 - 6, wherein after the carbonisation step b) the formed carbon product is separated in step c) and followed by washing the separated formed carbon product with water to wash out the salt, most preferably in reflux in a Soxhlet type of extraction, optionally followed by drying.

8. The process according to claim 7, wherein the washing is stopped before completely removing the salt to intentionally leave a residual amount of the metal-halide salt in the formed carbon product to act as electrolyte, wherein preferably the residual metal-halide salt is converted to it's metaloxide and/or metal hydroxide, preferably by addition of a strong base, which preferably is KOH or NaOH, wherein the amount of residual salt is between 0.01 - 20 wt%, preferably 0.02 - 15 wt%, more preferably 0.5 - 10 wt% of the total weight, and wherein more preferably the salt is ZnCl₂ and/or ZnCl₂ converted to ZnO and/or Zn(OH)₂.

9. A carbon product obtainable by the process according to anyone of claims 1 - 8.

10. The carbon product of claim 9, wherein the carbon product formed in the carbonisation step has a DOG of at least 45%, preferably at least 55%, more preferably at least 60% and even more preferably at least 65%.

11. The carbon product of claim 10, having one or more of the features a) to d):
a. an oxygen content between 1 and 40 wt%,
b. a surface area SA between 100 and 3000 m²/g,
c. comprising a residual fraction of the metal halide salt and/or it's metaloxide or metal hydroxide as electrolyte, preferably ZnCl₂ and/or ZnO or Zn(OH)₂, .
d. a pore volume between 0.3 and 3.0 ml/g, preferably between 0.5 and 2.0 ml/g

12. Use of the carbon product according to anyone of claims 9-11 as a precursor for the manufacture of Carbon Fibers, Graphene and Graphene Oxide.

13. Use of the carbon product according to anyone of claims 9-11 for the manufacture of electrode materials or electrodes.
